# EUROPEAN PATENT APPLICATION

(11) **EP 2 747 243 A2**
(43) Date of publication of application: **25.06.2014**
(21) Application number: 13188800.0
(22) Date of filing: 16.10.2013
(51) Int. Cl.: H02J 9/00

(54) **Power supply unit and wireless network communication system**

(30) Priority: 18.12.2012 CN 201210552362; 18.12.2012 CN 201220703273 U
(71) Applicant: Sercomm Corporation, Nangkang T'ai pei 115 (TW)
(72) Inventor: Shen, Yu-Li, 100 Taipei (TW); Yu, Yuan-Yuan, 215021 Suzhou Industrial Park (CN); Li, Jian, 215000 Suzhou City (CN)
(74) Representative: Von Kreisler Selting Werner - Partnerschaft von Patentanwälten und Rechtsanwälten mbB

(57) **Abstract**

A power supply unit and a wireless network communication system are provided. The wireless network communication system comprises a wireless network communication device (2) and a power supply unit (3). The power supply unit comprises a power supplier (31), a power detection circuit (32) and a wireless communication module (33). The power supplier converts an AC voltage into a working voltage required by the wireless network communication device. The power detection circuit comprises a rectifier circuit, a voltage divider and regulator circuit and a photoelectric isolation circuit. The rectifier circuit converts the AC voltage into a DC voltage. The voltage divider and regulator circuit provides a reference voltage according to the DC voltage. The photoelectric isolation circuit outputs a power detection signal (AL) according to the reference voltage. The wireless communication module transmits the power detection signal to the wireless network communication device by way of wireless transmission.

## Description

### BACKGROUND OF THE INVENTION

### Field of the Invention

The invention relates in general to a power supply unit and a wireless network communication system.

### Description of the Related Art

Based on various wireless communication standards, such as Zigbee standard, Z-wave standard, Wi-Fi standard, Bluetooth standard and digital enhanced cordless telecommunication (DECT) standard, a wireless communication gateway provides information which can be transmitted through particular wireless channels by using a predetermined power. The cordless advanced technology-internet and quality (CAT-iq) standard which integrates broadband network and telephone communication network is evolved from the DECT standard. The DECT ultra low energy (ULE) standard can possibly become a part of the CAT-iq standard. The DECT standard is a local area network (LAN) technology designed for short range, wireless, and low energy applications. It's advantages include less interference, longer communication distance, clearer voice, and hot-plug installation. Furthermore, it supports the transmission of voice, image and data. Moreover, a wireless communication gateway conforming to the DECT ULE standard has the advantage of very low power consumption.

Normally, the wireless communication gateway adopting the DECT ULE standard is connected to an external alternating current (AC) voltage through a power adaptor which converts the external AC voltage into a direct current (DC) voltage. However, once the power adaptor fails or the external AC voltage is interrupted, the supply of DC voltage will be gone. Although the wireless communication gateway can operate for a period of time with the power of a backup battery, the power can be interrupted at any time once the backup battery goes flat.

### SUMMARY OF THE INVENTION

The invention is directed to a power supply unit and a wireless network communication system.

According to one embodiment of the present invention, a power supply unit is provided. The power supply unit comprises a power supplier, a power detection circuit and a wireless communication module. The power supplier converts an AC voltage into a working voltage required by a wireless network communication device. The power detection circuit comprises a rectifier circuit, a voltage divider and regulator circuit and a photoelectric isolation circuit. The rectifier circuit converts the AC voltage into a DC voltage. The voltage divider and regulator circuit provides a reference voltage according to the DC voltage. The photoelectric isolation circuit outputs a power detection signal according to the reference voltage. The wireless communication module transmits the power detection signal to the wireless network communication device by way of wireless transmission.

According to another embodiment of the present invention, a wireless network communication system is provided. The wireless network communication system comprises a wireless network communication device and a power supply unit. The power supply unit comprises a power supplier, a power detection circuit and a wireless communication module. The power supplier converts an AC voltage into a working voltage required by the wireless network communication device. The power detection circuit comprises a rectifier circuit, a voltage divider and regulator circuit and a photoelectric isolation circuit. The rectifier circuit converts the AC voltage into a DC voltage. The voltage divider and regulator circuit provides a reference voltage according to the DC voltage. The photoelectric isolation circuit outputs a power detection signal according to the reference voltage. The wireless communication module transmits the power detection signal to the wireless network communication device by way of wireless transmission.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 shows a diagram of a wireless network communication system according to an embodiment of the invention;

FIG. 2 shows a block diagram of a power supply unit according to an embodiment of the invention; and

FIG. 3 shows a circuit diagram of a power detection circuit according to an embodiment of the invention.

### DETAILED DESCRIPTION OF THE INVENTION

Detailed descriptions of the principles and operations of the structure of the invention are disclosed below with accompanying drawings.

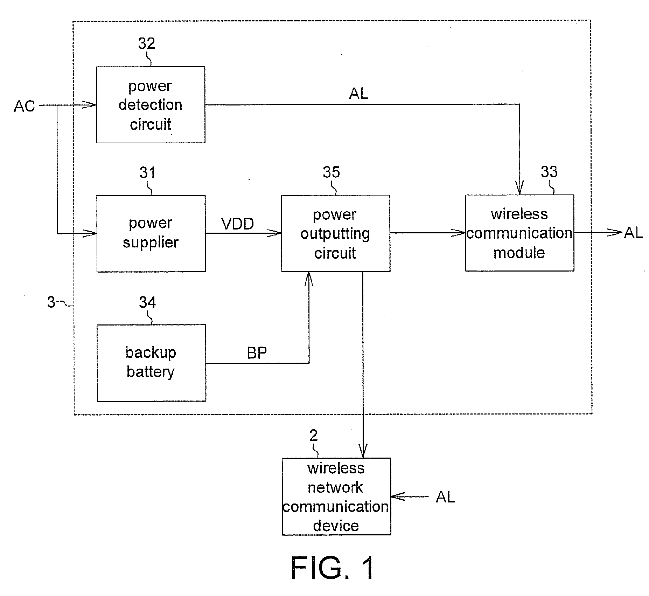

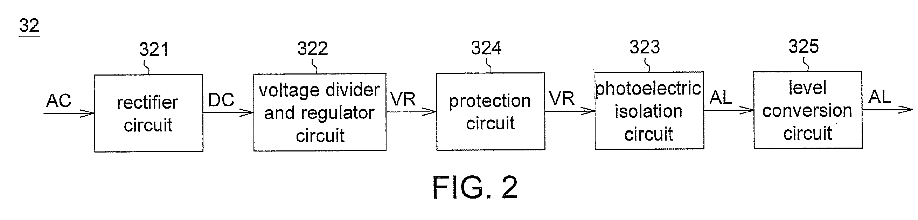

Referring to FIG. 1 and FIG. 2. FIG. 1 shows a diagram of a wireless network communication system according to an embodiment of the invention. FIG. 2 shows a block diagram of a power supply unit according to an embodiment of the invention. The wireless network communication system 1 comprises a wireless network communication device 2 and a power supply unit 3. The wireless network communication device 2 may be a communication device supporting Wi-Fi wireless transmission, IEEE802.11a/b/g wireless network communication protocol, Bluetooth wireless communication, long term technology (LTE) technology or worldwide interoperability for microwave access (WiMAX). For example, the wireless network communication device 2 is a wireless communication gateway.

The power supply unit 3 comprises a power supplier 31, a power detection circuit 32, a wireless communication module 33, a backup battery 34 and a power outputting circuit 35. The power supplier 31 converts an AC voltage AC into a working voltage VDD required by the wireless network communication device 2. The power detection circuit 32 checks whether the AC voltage AC is power down. The backup battery 34 provides a backup power BP when the AC voltage AC is power down. The power outputting circuit 35 selectively outputs the working voltage VDD or the backup power BP to the wireless network communication device 2.

The power detection circuit 32 comprises a rectifier circuit 321, a voltage divider and regulator circuit 322, a photoelectric isolation circuit 323, a protection circuit 324 and a level conversion circuit 325. The rectifier circuit 321 may be a full-wave rectifier or a half-wave rectifier. The full-wave rectifier may be a bridge rectifier. The rectifier circuit 321 converts the AC voltage AC into a DC voltage DC. The voltage divider and regulator circuit 322 provides a reference voltage VR according to the DC voltage DC. The photoelectric isolation circuit 323 outputs a power detection signal AL according to the reference voltage VR. The protection circuit 324 is coupled to the photoelectric isolation circuit 323 and the voltage divider and regulator circuit 322. The level conversion circuit 325 is coupled to the photoelectric isolation circuit 323. The power detection signal AL is outputted to the wireless communication module 33 via the level conversion circuit 325. The wireless communication module 33 transmits the power detection signal AL to the wireless network communication device 2 by way of wireless transmission. When the AC voltage AC is power down, the wireless network communication device 2 enters a power saving mode according to the power detection signal AL.

It should be noted that if the power detection circuit 32 determines whether the AC voltage AC is power down by checking the working voltage VDD outputted by the power supplier 31, then the backup battery 34 must have a larger capacity. This is because it takes a period of time for the power supplier 31 to convert the AC voltage AC into the working voltage VDD, and when the power detection circuit 32 determines that the AC voltage AC is power down by checking the working voltage VDD, the wireless network communication device 2 already consumed the backup power BP provided by backup battery 34.

In the present embodiment, the power detection circuit 32 directly checks whether the AC voltage AC is power down rather than determines whether the AC voltage AC is power down by checking the working voltage VDD outputted by the power supplier 31. Therefore, the power detection circuit 32 can instantly determine whether the AC voltage AC is power down. When the AC voltage AC is power down, the wireless network communication device 2 instantly enters a power saving mode according to the power detection signal AL. This allows the power supply unit 3 to be able to use a backup battery 34 having smaller capacity. As a result, the production cost can be reduced.

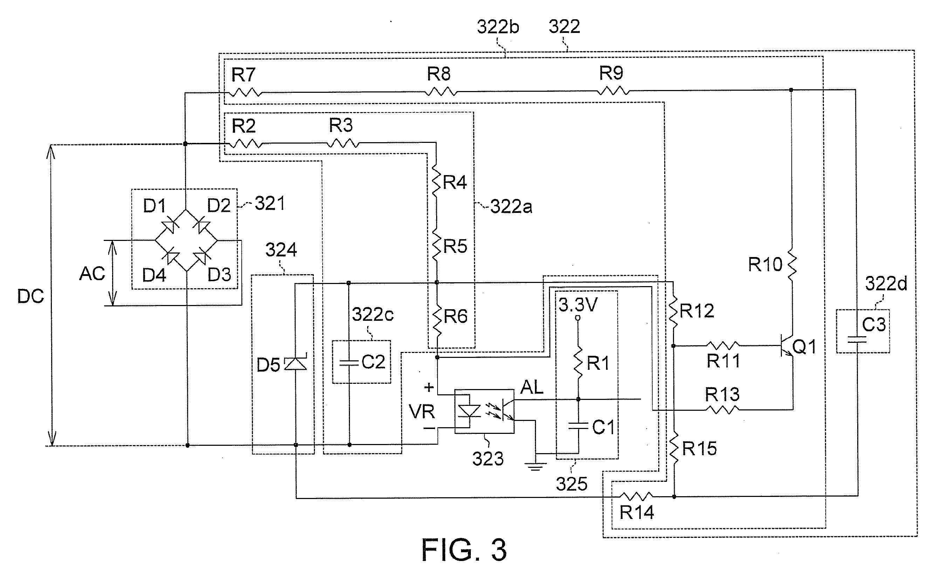

Referring to FIG. 3, a circuit diagram of a power detection circuit according to an embodiment of the invention is shown. The rectifier circuit 321 comprises diodes D1∼D4, which form a bridge rectifier. The protection circuit 324 comprises a Zener diode D5. The level conversion circuit 325 comprises a resistor R1 and a capacitor C1. The voltage divider and regulator circuit 322 comprises a voltage divider circuit 322a, a voltage divider circuit 322b, a regulator 322c and a regulator 322d. In the present embodiment, the regulator 322c and the regulator 322d are exemplified by a capacitor C2 and a capacitor C3, respectively.

The voltage divider circuit 322a is coupled to the rectifier circuit 321 and the photoelectric isolation circuit 323. The regulator 322c is coupled to the voltage divider circuit 322a and the photoelectric isolation circuit 323. The voltage divider circuit 322b is coupled to the rectifier circuit 321 and the photoelectric isolation circuit 323. The regulator 322d is coupled to the voltage divider circuit 322b. The voltage divider circuit 322a comprises resistors R2∼R6. The voltage divider circuit 322b comprises a transistor Q1 and resistors R7∼R15. The transistor Q1 of the voltage divider circuit 322b filters off the amplitude of the DC voltage DC and provides a reference voltage VR to the photoelectric isolation circuit 323 more accurately.

While the invention has been described by way of example and in terms of the preferred embodiment (s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A power supply unit, comprising:
a power supplier used for converting an AC voltage into a working voltage required by a wireless network communication device;
a power detection circuit, comprising:
a rectifier circuit used for converting the AC voltage into a DC voltage;
a voltage divider and regulator circuit used for providing a reference voltage according to the DC voltage;
a photoelectric isolation circuit used for outputting a power detection signal according to the reference voltage; and
a wireless communication module used for transmitting the power detection signal to the wireless network communication device by way of wireless transmission.

2. The power supply unit according to claim 1, wherein, the wireless network communication device enters a power saving mode according to the power detection signal when the AC voltage is power down.

3. The power supply unit according to claim 1, further comprising:
a backup battery use for providing a backup power when the AC voltage is power down; and
a power outputting circuit used for selectively outputting the working voltage or the backup power to the wireless network communication device.

4. The power supply unit according to claim 1, wherein, the power detection circuit further comprises:
a protection circuit coupled to the photoelectric isolation circuit and the voltage divider and regulator circuit.

5. The power supply unit according to claim 1, wherein, the power detection circuit further comprises:
a level conversion circuit coupled to the photoelectric isolation circuit, wherein the power detection signal is outputted to the wireless communication module via the level conversion circuit.

6. The power supply unit according to claim 1, wherein, the rectifier circuit is a bridge rectifier.

7. The power supply unit according to claim 1, wherein, the voltage divider and regulator circuit comprises:
a first voltage divider circuit coupled to the rectifier circuit and the photoelectric isolation circuit;
a first regulator coupled to the first voltage divider circuit and the photoelectric isolation circuit;
a second voltage divider circuit coupled to the rectifier circuit and the photoelectric isolation circuit; and
a second regulator coupled to the second voltage divider circuit.

8. A wireless network communication system, comprising:
a wireless network communication device; and
a power supply unit, comprising:
a power supplier used for converting an AC voltage into a working voltage required by the wireless network communication device;
a power detection circuit, comprising:
a rectifier circuit used for converting the AC voltage into a DC voltage;
a voltage divider and regulator circuit used for providing a reference voltage according to the DC voltage;
a photoelectric isolation circuit used for outputting a power detection signal according to the reference voltage; and
a wireless communication module used for transmitting the power detection signal to the wireless network communication device by way of wireless transmission.

9. The wireless network communication system according to claim 8, wherein, the wireless network communication device enters a power saving mode according to the power detection signal when the AC voltage is power down.

10. The wireless network communication system according to claim 8, wherein, the power supply unit further comprises:
a backup battery used for providing a backup power when the AC voltage is power down; and
a power outputting circuit used for selectively outputting the working voltage or the backup power to the wireless network communication device.

11. The wireless network communication system according to claim 8, wherein, the power detection circuit further comprises:
a protection circuit coupled to the photoelectric isolation circuit and the voltage divider and regulator circuit.

12. The wireless network communication system according to claim 8, wherein, the power detection circuit further comprises:
a level conversion circuit coupled to the photoelectric isolation circuit, wherein the power detection signal is outputted to the wireless communication module via the level conversion circuit.

13. The wireless network communication system according to claim 8, wherein, the rectifier circuit is a bridge rectifier.

14. The power supply unit according to claim 8, wherein, the voltage divider and regulator circuit comprises:
a first voltage divider circuit coupled to the rectifier circuit and the photoelectric isolation circuit;
a first regulator coupled to the first voltage divider circuit and the photoelectric isolation circuit;
a second voltage divider circuit coupled to the rectifier circuit and the photoelectric isolation circuit; and
a second regulator coupled to the second voltage divider circuit.
